# EUROPÄISCHE PATENTANMELDUNG

(11) **EP 4 706 803 A1**
(43) Veröffentlichungstag der Anmeldung: **11.03.2026**
(21) Anmeldenummer: 25199962.9
(22) Anmeldetag: 03.09.2025
(51) Int. Cl.: B01D 53/62, B01D 53/78, B01D 53/96, F24D 5/12, F24D 17/02, F24H 4/06

(54) **WÄRMEPUMPENMODUL MIT KOHLENSTOFFDIOXIDABSCHEIDUNG AUS DER LUFT**

(30) Priorität: 09.09.2024 DE 102024208534
(71) Anmelder: Robert Bosch GmbH, 70442 Stuttgart (DE)
(72) Erfinder: Mueller, Johannes Christian, 70569 Stuttgart (DE)

(57) **Zusammenfassung**

Die Erfindung betrifft ein Wärmepumpenmodul zum Entzug von Wärme aus Umgebungsluft, bevorzugt zum Beheizen eines Innenraums von einem Gebäude, umfassend einen ersten Wärmetauscher (5) und ein Gebläse (6), mittels welchem ein Volumenstrom (3) der Umgebungsluft durch den ersten Wärmetauscher (5) förderbar ist.

## Beschreibung

### Technisches Gebiet

Die Erfindung betrifft ein Wärmepumpenmodul, insbesondere zum Beheizen eines Gebäudes, wobei das Wärmepumpenmodul eine Vorrichtung zum Entnehmen von Kohlenstoffdioxid aus der Atmosphäre aufweist.

### Stand der Technik

Anlagen zum Entfernen von Kohlenstoffdioxid aus der Atmosphäre sind bekannt, wobei diese meist als Großanlagen umgesetzt sind. Dieser Ansatz wird als "Direct Air Capturing" (DAC) bezeichnet. Eine Alternative zu Großanlagen ist der Einsatz vieler kleiner und mittlerer DAC-Anlagen. Diese sind im Betrieb jedoch oft nicht wirtschaftlich. Insbesondere die Erzeugung eines zum Betrieb einer DAC-Anlage notwendigen großen Volumenstroms an Umgebungsluft ist mit einem großen Energieaufwand verbunden und kostenintensiv. Weiterhin ist der zusätzliche Raumbedarf, insbesondere eines Gebläses, nachteilig. In besonderem Maß betrifft das kleine DAC-Anlagen, wie sie an Gebäuden, insbesondere an Wohngebäuden, nutzbar sind.

Die Aufgabe der Erfindung ist es die genannten Nachteile des Stands der Technik zu überwinden und insbesondere eine kostengünstige und bauraumeffiziente Umsetzung einer DAC-Anlage vorzuschlagen.

### Offenbarung der Erfindung

Das erfindungsgemäße Wärmepumpenmodul mit den Merkmalen des Anspruchs 1, das Wärmepumpensystem mit den Merkmalen des Anspruchs 6, das Verfahren zum Betrieb eines Wärmepumpenmoduls mit den Merkmalen des Anspruchs 9 und das Verfahren zum Betrieb eines Wärmepumpensystems mit den Merkmalen des Anspruchs 14 haben den Vorteil, dass einem Volumenstrom von Umgebungsluft durch das Wärmepumpenmodul neben Wärme auch Kohlenstoffdioxid entzogen wird. Dabei wird ein Gebläse zum Erzeugen eines Volumenstroms von Umgebungsluft, das ein zentrales Bauteil eines Wärmepumpenmoduls ist, in einer zusätzlichen Weise nutzbringend eingesetzt. Mit anderen Worten ausgedrückt ist mit dem erfindungsgemäßen Wärmepumpenmodul eine DAC-Anlage realisiert, wobei die DAC-Anlage vorteilhaft ein vorhandenes Gebläse nutzt. Damit ist besonders vorteilhaft eine synergetische Kombination aus DAC-Anlage und Wärmepumpe gegeben.

Das erfindungsgemäße Wärmepumpenmodul zum Entzug von Wärme aus Umgebungsluft, bevorzugt zum Beheizen eines Innenraums von einem Gebäude, umfasst einen ersten Wärmetauscher und ein Gebläse, mittels welchem ein Volumenstrom der Umgebungsluft durch den ersten Wärmetauscher förderbar ist.

Erfindungsgemäß ist vorgesehen, dass das Wärmepumpenmodul eine Gaswäschevorrichtung bzw. eine Kohlenstoffdioxid-Gaswäschevorrichtung zur nasschemischen Gaswäsche umfasst, wobei die Gaswäschevorrichtung bzw. die Kohlenstoffdioxid-Gaswäschevorrichtung so angeordnet ist, dass der mittels des Gebläses erzeugte Volumenstrom durch die Gaswäschevorrichtung gefördert wird, wodurch Kohlenstoffdioxid mittels nasschemischer Gaswäsche aus dem Volumenstrom entnehmbar ist.

Vorteilhafte Weiterbildungen des erfindungsgemäßen Wärmepumpenmoduls sind in den Unteransprüchen aufgeführt.

In einer ersten bevorzugten Ausführungsform des Wärmepumpenmoduls kann die Gaswäschevorrichtung eine Elektrodialysevorrichtung, bevorzugt umfassend einen Bipolar-Membran-Elektrodialyse-Stapel, aufweisen. Mittels dieser ist eine wässrige Salzlösung, bevorzugt eine wässrige Natriumchlorid-Lösung, Kaliumchlorid-Lösung, Natriumacetat-Lösung oder Kaliumcarbonat-Lösung, durch Elektrodialyse, insbesondere durch Bipolar-Membran-Elektrodialyse, in eine Säure und in eine Lauge umsetzbar. In der Elektrodialysevorrichtung werden Ionen aus Elektrolyten unter dem Einfluss eines elektrischen Feldes durch Ionenaustauschmembranen getrennt. Durch den elektrisch getriebenen Übergang von Ionen durch die Membran ist eine wässrige Salzlösung in die korrespondierende Säure und Lauge auftrennbar. Die Elektrodialysevorrichtung weist dazu einen gestapelten Aufbau von Membranen auf. Insbesondere Elektrodialysevorrichtungen mit bipolaren Membranen erlauben eine effektive Erzeugung von Säure und Lauge.

Beispielsweise ist mittels einer Elektrodialysevorrichtung aus einer wässrigen Natriumchloridlösung bzw. wässrigen Kochsalzlösung Salzsäure und Natronlauge herstellbar.

In einer weiteren bevorzugten Ausführungsform des Wärmepumpenmoduls kann die Gaswäschevorrichtung ein Chemikalienspeichermittel umfassen, mittels welchem Chemikalien zum Betrieb der Gaswäschevorrichtung, insbesondere die Säure und die Lauge, bevorratbar sind. Vorteilhaft kann mittels des Chemikalienspeichermittels ein besonders energieintensiver Teilprozess des DAC-Prozesses, nämlich die Elektrodialyse, von der Abscheidung von Kohlenstoffdioxid zeitlich getrennt werden. Vorteilhaft ist ein kontinuierlicher Abscheideprozess mittels der gespeicherten Chemikalien möglich, während die Elektrodialyse mit ihrem hohen Stromverbrauch bei günstig verfügbarer elektrischer Energie durchführbar ist. Besonders vorteilhaft wirkt das mit einer schwankenden Erzeugung von elektrischer Energie und/oder schwankenden Strompreisen zusammen.

In einer weiteren bevorzugten Ausführungsform des Wärmepumpenmoduls kann die Gaswäschevorrichtung einen Reaktionsabschnitt umfassen, der mittels des Gebläses mit dem Volumenstrom durchströmbar ist. Der Reaktionsabschnitt ist entlang einer Luftstromrichtung bevorzugt vor dem ersten Wärmetauscher, insbesondere zwischen Gebläse und erstem Wärmetauscher, angeordnet, wobei der Reaktionsabschnitt eine Laugendüse umfasst, mit der Lauge dem Volumenstrom zuführbar ist, sodass Kohlenstoffdioxid aus dem Volumenstrom mit der Lauge umsetzbar und in einem Zwischenprodukt chemisch bindbar ist. Es sind verschiedene Bauformen eines solchen Reaktionsabschnitts zur nassen Gaswäsche bekannt, um einen effektiven Kontakt des Kohlenstoffdioxids mit der Lauge zu gewährleisten und damit eine effektive Abscheidung des Kohlenstoffdioxids aus dem Volumenstrom zu erreichen. Aufgrund der geringen Konzentration von Kohlenstoffdioxid in der Atmosphäre ist ersichtlich, dass ein großer Volumenstrom Umgebungsluft nötig ist, um eine technisch sinnvolle Menge Kohlenstoffdioxid aus dem Volumenstrom abzuscheiden. Das Gebläse, welches für den Betrieb der Wärmepumpe notwendig ist, erzeugt einen großen Volumenstrom, sodass eine vorteilhaft synergetische Nutzung zum Abscheiden von Kohlenstoffdioxid möglich ist. Besonders vorteilhaft durchströmt der Volumenstrom entlang der Luftstromrichtung erst den Reaktionsabschnitt und danach den ersten Wärmetauscher, da in dem ersten Wärmetauscher Wärme aus dem Volumenstrom entnommen wird, wodurch dessen Temperatur absinkt und verdunstete Lauge kondensiert und damit aus dem Volumenstrom abtrennbar ist. Dadurch wird vorteilhaft der Verlust von Lauge reduziert. Weiter vorteilhaft ist der Aufwand für eine anschließende Filterung des Volumenstroms verringert. Ein Luftfilter und/oder ein Tropfenabscheider, der von dem Volumenstrom durchströmt wird, ist vorteilhaft vor einem Luftauslass in die Umgebung angeordnet, um einen Austrag von Lauge in die Umgebung zu verhindern. Der erste Wärmetauscher ist vorteilhaft aus korrosionsbeständigen, insbesondere gegenüber der Lauge beständigen, Materialien, beispielsweise aus korrosionsbeständigem Stahl, ausgeführt, sodass Beschädigungen durch Lauge, die in dem Volumenstrom enthalten ist, minimiert, bevorzugt verhindert, sind.

In einer beispielhaften Ausführungsform kann Natronlauge mit dem Kohlenstoffdioxid aus dem Volumenstrom unter Erzeugung von Sodawasser reagieren, sodass das Kohlenstoffdioxid in dem Sodawasser chemisch gebunden ist.

In einer weiteren bevorzugten Ausführungsform des Wärmepumpenmoduls kann die Gaswäschevorrichtung einen Kohlenstoffdioxidabscheider mit einer Säureeinleitung aufweisen, über welche die Säure in das Zwischenprodukt einleitbar ist, sodass im Kohlenstoffdioxidabscheider Kohlenstoffdioxid durch eine exotherme chemische Reaktion freisetzbar und auffangbar ist und die wässrige Salzlösung als Reaktionsprodukt entsteht. Damit kann zur Abscheidung von Kohlenstoffdioxid vorteilhaft ein geschlossener Chemikalienkreislauf ausgebildet sein. Damit ist im Betrieb der Gaswäschevorrichtung vorteilhaft kein Verbrauch an Chemikalien gegeben, jedenfalls kein Verbrauch an Chemikalien über unvermeidbare Verluste hinaus. Die exotherme Reaktion setzt Energie frei, welche als Wärmeenergie dem ersten Wärmetauscher zuführbar ist. Weiterhin kann das in dem Kohlenstoffdioxidabscheider freigesetzte Kohlenstoffdioxid durch die Energie der exothermen Reaktion unter einem erhöhten Gasdruck stehen.

Beispielhaft kann aus dem Sodawasser, in welchem das Kohlenstoffdioxid chemisch gebunden ist, durch Zugabe von Salzsäure, das Kohlenstoffdioxid freigesetzt werden. Dabei entsteht als weiteres Reaktionsprodukt die wässrige Kochsalzlösung.

In einer alternativen Ausführungsform umfasst die Gaswäschevorrichtung eine Elektrodialysevorrichtung mit einem kombinierten Aufbau aus Bipolar-Elektrodialyse-Membranen und einer Anionen-Austauscher-Membran, welche in der Elektrodialysevorrichtung eine Trennung eines Säurebereichs von einem Laugenbereich bildet. Die Elektrodialysevorrichtung ist dabei fluidleitend mit dem Reaktionsabschnitt verbunden, sodass eine Lauge aus dem Laugenbereich der Elektrodialysevorrichtung in den Reaktionsabschnitt geleitet wird, wobei durch Reaktion mit Kohlenstoffdioxid ein Zwischenprodukt, in dieser Ausführungsform ein Carbonat bzw. ein Salz der Kohlensäure entsteht, das in wässriger Lösung in den Laugenbereich geleitet wird. Die Anionen-Austauscher-Membran ist durchlässig für einen Übergang von Ionen des Zwischenprodukts von dem Laugenbereich in den Säurebereich, wobei im Säurebereich die Säure, in dieser Ausführungsform Kohlensäure, erzeugt wird. Der Säurebereich ist fluidleitend mit einem Behälter verbunden, in welchem die Kohlensäure, insbesondere durch eine Druckreduktion, zu Kohlenstoffdioxid und Wasser zerfällt. Mit einer Rückleitung ist der Behälter fluidleitend mit der Elektrodialysevorrichtung verbunden, sodass Wasser in die Elektrodialysevorrichtung geleitet wird. Die Elektrodialysevorrichtung steht vorteilhaft unter einem erhöhten Druck, sodass ein Zerfall der Kohlensäure in der Elektrodialysevorrichtung verringert ist, was die elektrischen Eigenschaften der Elektrodialysevorrichtung vorteilhaft beeinflusst. Eine Gaswäschevorrichtung kann so besonders effizient ausgeführt sein.

Die Erfindung betrifft weiterhin ein Wärmepumpensystem, bevorzugt zum Beheizen eines Innenraums von einem Gebäude, das einen zweiten Wärmetauscher, bevorzugt zur Abgabe von Wärme an einen Innenraum, umfasst.

Erfindungsgemäß ist dabei ein erfindungsgemäßes Wärmepumpenmodul vorgesehen, wobei der zweite Wärmetauscher in einem Kältemittelkreislauf mit dem Wärmepumpenmodul, insbesondere mit dem ersten Wärmetauscher, fluidleitend verbunden ist.

In einer ersten bevorzugten Ausführungsform des Wärmepumpensystems kann der Kältemittelkreislauf für die Verwendung von Kohlenstoffdioxid als Kältemittel eingerichtet sein und eine Kohlenstoffdioxideinleitung aufweisen, die mit einer Kohlenstoffdioxidausleitung der Gaswäschevorrichtung fluidleitend verbunden ist, so dass Kohlenstoffdioxid in den Kältemittelkreislauf einleitbar ist. Kohlenstoffdioxid ist aufgrund günstiger physikalischer Eigenschaften, aufgrund seiner Ungiftigkeit und aufgrund der vergleichsweise geringen Klimaschädlichkeit ein vorteilhaftes Kältemittel. Zur Verwendung von Kohlenstoffdioxid als Kältemittel ist, beispielsweise aufgrund der Lage des sogenannten kritischen Punkts, ein gezielt angepasster Kältemittelkreislauf notwendig. Damit kann ein im Vergleich zu anderen Kältemitteln erhöhter anlagentechnischer Aufwand einhergehen. Eine vorteilhafte Wirkung von Kohlenstoffdioxid als Kältemittel liegt darin, dass durch das kontinuierliche Abscheiden von Kohlenstoffdioxid aus dem Volumenstrom mögliche Leckagen und anderweitige Verluste in dem Kältemittelkreislauf ausgleichbar sind. Das kann vorteilhaft eine Verlängerung eines Serviceintervalls ermöglichen. Vorteilhaft ist das Kohlenstoffdioxid gasförmig in den Kältemittelkreislauf einleitbar, sodass es ohne eine Veränderung des Aggregatszustands nutzbar ist.

In einer vorteilhaft weiterbildenden Ausführungsform des Wärmepumpensystems kann der Kältemittelkreislauf eine Kohlenstoffdioxidausleitung umfassen, über die flüssiges Kohlenstoffdioxid aus dem Kältemittelkreislauf ausleitbar ist, wobei die Kohlenstoffdioxidausleitung bevorzugt mit einem von dem Wärmepumpensystem umfassten Flüssiggasbehälter zur Speicherung des flüssigen Kohlenstoffdioxids fluidleitend verbunden ist. Im Betrieb des Kältemittelkreislaufs entweicht bevorzugt wenig, besonders bevorzugt kein, Kohlenstoffdioxid unbeabsichtigt, sodass durch eine Kohlenstoffdioxideinleitung in den Kältemittelkreislauf die Kohlenstoffdioxidmenge in dem Kältemittelkreislauf ansteigt. Vorteilhaft ist das durch eine Entnahme von Kohlenstoffdioxid aus dem Kältemittelkreislauf mittels der Kohlenstoffdioxidausleitung ausgleichbar. Ein Kältemittelkreislauf zur Nutzung von Kohlenstoffdioxid als Kältemittel umfasst einen Phasenseparator, in welchem Kohlenstoffdioxid flüssig vorliegt. Die Kohlenstoffdioxidausleitung ist vorteilhaft mit dem Phasenseparator fluidleitend verbunden. In flüssiger Form nimmt ein Gas ein vorteilhaft geringes Volumen ein, weshalb bevorzugt das flüssige Kohlenstoffdioxid aus dem Kältemittelkreislauf ausgeleitet wird. Besonders vorteilhaft kann das flüssige Kohlenstoffdioxid zur Speicherung in einen von dem Wärmepumpensystem umfassten Flüssiggasbehälter eingeleitet werden.

In einer weiteren bevorzugten Ausführungsform des Wärmepumpensystems kann eine Photovoltaikanlage zur Bereitstellung elektrischer Energie zum Betrieb des Wärmepumpensystems, insbesondere der Gaswäschevorrichtung, vorgesehen sein. Der Betrieb der Gaswäschevorrichtung, insbesondere der Betrieb der Elektrodialysevorrichtung ist energieintensiv. Eine netto-negative Kohlenstoffdioxidbilanz der Nutzung es Wärmepumpensystems ist durch Verwendung von regenerativ erzeugtem Strom gegeben. Daher ist ein Wärmepumpensystem mit einer Photovoltaikanlage besonders vorteilhaft. Betriebsphasen mit besonders hoher Leistung der regenerativen Stromerzeugung können einfach erkennbar sein, sodass der Betrieb der Gaswäschevorrichtung, insbesondere der Elektrodialysevorrichtung, vorteilhaft gezielt beeinflussbar und darauf abstimmbar ist. Weiterhin ist der Betrieb eines Wärmepumpensystems bei Nutzung von Strom einer integrierten Photovoltaikanlage besonders kostengünstig.

In einer weiteren bevorzugten Ausführungsform des Wärmepumpensystems kann eine Kohlenstoffdioxidausleitung des Wärmepumpensystems fluidleitend mit einem Gewächshaus verbunden sein, sodass das aus dem Volumenstrom entnommene Kohlenstoffdioxid zur Schaffung und/oder Aufrechterhaltung einer Atmosphäre mit erhöhtem Kohlenstoffdioxidgehalt in dem Gewächshaus nutzbar ist. Das Wachstum von Pflanzen kann durch einen erhöhten Kohlenstoffdioxidgehalt in einer sie umgebenden Atmosphäre gefördert werden. Dazu sind Anlagen zur Erhöhung des Kohlenstoffdioxidgehalts in der Luft eines Gewächshauses bekannt. Mit einem solchen Gewächshaus ist eine besonders vorteilhafte Ausführungsform des Wärmepumpensystems gegeben, da das abgeschiedene Kohlenstoffdioxid einer nutzbringenden Verwendung zugeführt wird. Vorteilhaft kann auf eine zusätzliche Versorgung des Gewächshauses mit Kohlenstoffdioxid, welche mit einem Aufwand an Kosten und/oder Logistik verbunden sein kann, verzichtet werden. Weiterhin ist es möglich mit einem erfindungsgemäßen Wärmepumpensystem sowohl Wärme als auch Kohlenstoffdioxid für den Betrieb eines Gewächshauses bereitzustellen.

Weiterhin betrifft die Erfindung ein Verfahren zum Betrieb eines erfindungsgemäßen Wärmepumpenmoduls zum Entzug von Wärme aus Umgebungsluft, bevorzugt zum Beheizen eines Innenraums von einem Gebäude. Das Wärmepumpenmodul umfasst einen ersten Wärmetauscher und ein Gebläse, mittels welchem ein Volumenstrom der Umgebungsluft durch den ersten Wärmetauscher gefördert wird.

Erfindungsgemäß ist vorgesehen, dass der Volumenstrom mittels des Gebläses durch eine vom Wärmepumpenmodul umfasste Gaswäschevorrichtung gefördert wird, wobei Kohlenstoffdioxid mittels nasschemischer Gaswäsche aus dem Volumenstrom entnommen wird.

In einer ersten vorteilhaften Ausführungsform des Verfahrens kann mittels einer Elektrodialysevorrichtung der Gaswäschevorrichtung, bevorzugt umfassend einen Bipolar-Membran-Elektrodialyse-Stapel, eine wässrige Salzlösung durch Elektrodialyse, bevorzugt durch Bipolar-Membran-Elektrodialyse, in eine Säure und in eine Lauge umgesetzt werden. Bevorzugt handelt es sich bei der wässrigen Salzlösung um eine wässrige Natriumchlorid-Lösung, Kaliumchlorid-Lösung, Natriumacetat-Lösung oder Kaliumcarbonat-Lösung.

In einer weiteren vorteilhaften Ausführungsform des Verfahrens kann ein Reaktionsabschnitt der Gaswäschevorrichtung, welcher entlang einer Luftstromrichtung vorteilhaft vor dem ersten Wärmetauscher, insbesondere zwischen dem Gebläse und dem ersten Wärmetauscher, angeordnet ist, mit dem vom Gebläse erzeugten Volumenstrom durchströmt werden. Dabei wird die Lauge in dem Reaktionsabschnitt mittels einer Laugendüse dem Volumenstrom zugeführt, wobei Kohlenstoffdioxid aus dem Volumenstrom mit der Lauge umgesetzt und in einem Zwischenprodukt chemisch gebunden wird.

In einer weiteren vorteilhaften Ausführungsform des Verfahrens kann in einem Kohlenstoffdioxidabscheider der Gaswäschevorrichtung die Säure mittels einer Säureeinleitung in das Zwischenprodukt zugeführt werden. Dabei wird durch eine exotherme chemische Reaktion das Kohlenstoffdioxid freigesetzt und in dem Kohlenstoffdioxidabscheider aufgefangen, wobei die wässrige Salzlösung als Reaktionsprodukt entsteht.

In einer weiteren vorteilhaften Ausführungsform des Verfahrens kann das aufgefangene Kohlenstoffdioxid eine Gastrocknungseinheit durchströmen, in welcher ein Druck des Kohlenstoffdioxids vermindert wird und das Kohlenstoffdioxid dabei abgekühlt wird. Dadurch kondensiert darin enthaltene Feuchtigkeit in der Gastrocknungseinheit und wird aus dem aufgefangenen Kohlenstoffdioxid abgetrennt. Das Kohlenstoffdioxid liegt, bevorzugt durch die freigesetzte Energie der exothermen Reaktion, unter einem erhöhten Druck vor und kann in der Gastrocknungseinheit entspannt werden. Ein Trocknen des Kohlenstoffdioxids ist vorteilhaft, da das Kohlenstoffdioxid nasschemisch abgeschieden wird, sodass das Gas Feuchtigkeit enthält, wobei diese Feuchtigkeit mit dem Kohlenstoffdioxid zu Kohlensäure reagieren und Korrosionsschäden verursachen kann. Die Gastrocknungseinheit wirkt dem vorteilhaft entgegen.

In einer weiteren vorteilhaften Ausführungsform des Verfahrens kann das getrocknete Kohlenstoffdioxid verdichtet und in einen Druckgasbehälter geleitet werden. Eine Lagerung des Kohlenstoffdioxids unter erhöhtem Druck erlaubt eine Lagerung mit einem vorteilhaft geringen Volumen. Weiterhin sind Druckgasflaschen zum Transport und zur Lagerung von technischen Gasen üblich. Eine Abfüllung des Kohlenstoffdioxids in einem Druckgasbehälter erlaubt damit eine vorteilhaft einfache Integration in eine Logistik zur weiteren Nutzung und/oder Entsorgung des Kohlenstoffdioxids.

Weiterhin betrifft die Erfindung ein Verfahren zum Betrieb eines erfindungsgemäßen Wärmepumpensystems, welches ein erfindungsgemäßes Wärmepumpenmodul umfasst.

Erfindungsgemäß ist dabei vorgesehen, dass aus dem Volumenstrom entnommenes, bevorzugt gasförmiges, Kohlenstoffdioxid in einen Kältemittelkreislauf des Wärmepumpensystems über eine Kohlenstoffdioxideinleitung eingeleitet wird, wobei in dem Kältemittelkreislauf flüssiges Kohlenstoffdioxid anfällt, welches wenigstens teilweise über eine Kohlenstoffdioxidausleitung aus dem Kältemittelkreislauf ausgeleitet wird. Bevorzugt wird es in einen fluidleitend mit der Kohlenstoffdioxidausleitung verbundenen Flüssiggasbehälter geleitet.

Zur Vermeidung unnötiger Dopplungen wird in Bezug auf die Vorteile der erfindungsgemäßen Verfahren zum Betrieb eines Wärmepumpenmoduls und eines Wärmepumpensystems auf die voranstehenden Ausführungen mit Bezug auf das Wärmepumpenmodul und auf das Wärmepumpensystem verwiesen.

Verfahrensmäßig offenbarte Merkmale sollen als auch vorrichtungsmäßig offenbart angesehen werden und beanspruchbar sein und umgekehrt.

Weitere Vorteile, Merkmale und Einzelheiten der Erfindung ergeben sich aus der nachfolgenden Beschreibung bevorzugter Ausführungsformen der Erfindung sowie anhand der Zeichnungen.

Kurze Beschreibung der Zeichnungen
- Fig. 1: zeigt eine schematische Darstellung eines erfindungsgemäßen Wärmepumpensystems in einer ersten Ausführungsform,
- Fig. 2: zeigt eine schematische Darstellung eines erfindungsgemäßen Wärmepumpensystems in einer zweiten Ausführungsform,
- Fig. 3: zeigt eine schematische Darstellung eines erfindungsgemäßen Wärmepumpensystems in einer dritten Ausführungsform,
- Fig. 4: zeigt einen Elektrodialysestapel in einer ersten Ausführungsform,
- Fig. 5: zeigt einen Elektrodialysestapel in einer zweiten Ausführungsform.

### Ausführungsformen der Erfindung

Gleiche Elemente bzw. Elemente mit gleicher Funktion sind in den Figuren mit den gleichen Bezugsziffern versehen.

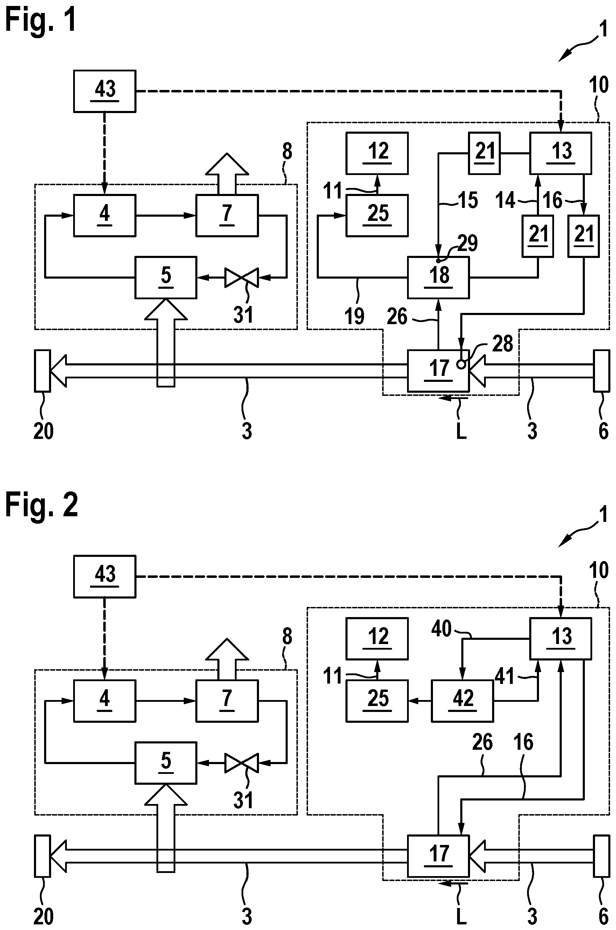

Die Fig. 1 zeigt eine schematische Darstellung eines erfindungsgemäßen Wärmepumpensystems 1 in einer ersten Ausführungsform. Das Wärmepumpensystem 1 entspricht in Bezug auf die Baugruppen der Wärmepumpe 8 zur Erzeugung nutzbarer Wärme dem Stand der Technik. Ein Gebläse 6 saugt Umgebungsluft an und erzeugt einen Volumenstrom 3, welcher entlang einer Luftstromrichtung L durch einen Reaktionsabschnitt 17, einen ersten Wärmetauscher 5 und durch einen Laugenabscheider 20 geführt wird. Der Reaktionsabschnitt 17 ist Teil einer Gaswäschevorrichtung 10, mittels welcher Kohlenstoffdioxid aus dem Volumenstrom 3 entnommen wird.

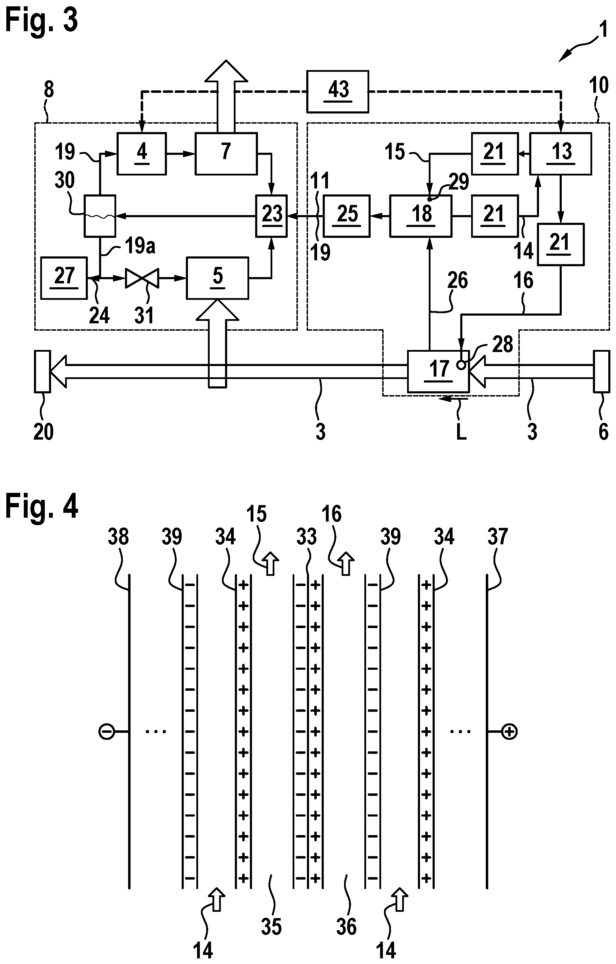

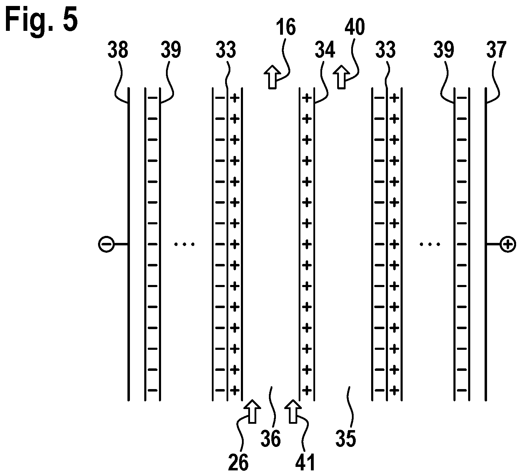

Die Gaswäschevorrichtung 10 umfasst eine Elektrodialysevorrichtung 13, welche eine wässrige Salzlösung 14 unter Einsatz von elektrischer Energie in eine Säure 15 und in eine Lauge 16 auftrennt. Dazu umfasst die Elektrodialysevorrichtung 13 einen Bipolar-Membran-Elektrodialyse-Stapel (vgl. auch Fig. 4, 5). Beispielhaft kann eine Kochsalzlösung in Salzsäure und Natronlauge aufgetrennt werden.

Die Elektrodialysevorrichtung 13 ist fluidleitend mit dem Reaktionsabschnitt 17 verbunden, wobei Lauge 16 in dem Reaktionsabschnitt 17 mittels der Laugendüse 28 in den Volumenstrom 3 dosiert wird. Mit Kohlenstoffdioxid, das in dem Volumenstrom 3 enthalten ist, reagiert die Lauge 16 unter Ausbildung eines Zwischenprodukts 26, welches in einen Kohlenstoffdioxidabscheider 18 geleitet wird. Handelt es sich bei der Lauge 16 um die beispielhafte Natronlauge, dann wird Sodawasser als Zwischenprodukt 26 gebildet.

In dem Kohlenstoffdioxidabscheider 18 wird dem Zwischenprodukt 26 mittels einer Säureeinleitung 29 die Säure 15 zugesetzt. Das Zwischenprodukt 26 reagiert mit der Säure 15 in einer exothermen chemischen Reaktion unter Freisetzung von gasförmigem Kohlenstoffdioxid 19 und unter Erzeugung der wässrigen Salzlösung 14, welche in die Elektrodialysevorrichtung 13 geleitet wird. Die freigesetzte Energie der exothermen Reaktion ist einerseits als Wärmeenergie mittels des ersten Wärmetauschers 5 nutzbar und erhöht andererseits den Druck des gasförmigen Kohlenstoffdioxids 19.

Der Aufbau der Gaswäschevorrichtung 10 mit einer Trennung von Elektrodialyse und Freisetzung des aus dem Volumenstrom 3 entnommenen Kohlenstoffdioxids 19 bedingt im vorliegenden Ausführungsbeispiel eine zweischrittige Ausführung der Elektrodialyse und der Abscheidung und gezielten Freisetzung des Kohlenstoffdioxids 19. Die Elektrodialyse kann unabhängig von der Kohlenstoffdioxidabscheidung betrieben werden. Dazu weist die Gaswäschevorrichtung 10 Chemikalienspeichermittel 21 auf, in denen die wässrige Salzlösung 14, die Säure 15 und die Lauge 16 bevorratet werden. Das kann vorteilhaft den Betrieb der Elektrodialysevorrichtung 13 vom Betrieb der gesamten Gaswäschevorrichtung 10 entkoppeln, so dass ein schwankendes Angebot elektrischer Energie, insbesondere mit schwankenden Kosten, vorteilhaft nutzbar ist.

In einer Gastrocknungseinheit 25 wird das unter erhöhtem Druck stehende gasförmige Kohlenstoffdioxid 19 entspannt, wodurch die Temperatur des gasförmigen Kohlenstoffdioxids 19 absinkt. Dabei kondensiert darin enthaltene Flüssigkeit und kann aus dem gasförmigen Kohlenstoffdioxid 19 entfernt werden. Das so getrocknete gasförmige Kohlenstoffdioxid 19 wird verdichtet und mittels einer Kohlenstoffdioxidausleitung 11 in einen Druckgasbehälter 12 eingeleitet. Aus diesem Druckgasbehälter 12 kann das Kohlenstoffdioxid 19 zu einer weiteren Verwendung oder zu einer Entsorgung entnommen werden. Ist der Druckgasbehälter 12 als wechselbarer Druckgasbehälter, beispielsweise in Form einer Druckgasflasche, ausgeführt, ist es möglich einen gefüllten Druckgasbehälter 12 durch einen leeren Druckgasbehälter 12 auszutauschen.

Entlang der Luftstromrichtung L wird der Volumenstrom 3 nach dem Durchströmen des Reaktionsabschnitts 17 zu einem ersten Wärmetauscher 5 geführt. Dieser erste Wärmetauscher 5, im vorliegenden Beispiel als Verdampfer ausgeführt, entzieht dem Volumenstrom 3 Wärme. Dadurch sinkt die Temperatur des Volumenstroms 3 ab, sodass Lauge 16, die darin enthalten sein kann, kondensiert und in einem Laugenabscheider 20 aus dem Volumenstrom 3 abgetrennt werden kann. In dem Laugenabscheider 20 ist weiterhin ein Filtermittel angeordnet welches verhindert, dass Lauge 16 aus dem Wärmepumpensystem 1 austritt. Die mittels des ersten Wärmetauschers 5 aus dem Volumenstrom 3 entzogene Wärme wird mittels eines Kältemittelkreislaufs, umfassend den ersten Wärmetauscher 5, einen Kompressor 4, einen Kondensator als zweitem Wärmetauscher 7 und einer Drossel 31, zur Nutzung abgegeben.

Das Wärmepumpensystem 1 umfasst als Energiequelle eine Photovoltaikanlage 43, welche die elektrische Energie zum Betrieb der Elektrodialysevorrichtung 13 und des Kompressors 4 bereitstellt. Durch die Nutzung regenerativ erzeugter elektrischer Energie ist mittels der Gaswäschevorrichtung 10 eine netto-negative Kohlenstoffdioxidbilanz gegeben. Dabei ist es mittels der Chemikalienspeichermittel 21 möglich die Elektrodialysevorrichtung 13 in Betriebszuständen des Wärmepumpensystems 1 zu betreiben, in welchem die Photovoltaikanlage 43 ausreichend viel elektrische Energie bereitstellt. Insbesondere kann dabei Überschussstrom, der anderweitig nicht vor Ort nutzbar ist, genutzt werden. So ist ein besonders günstiger Betrieb der Elektrodialysevorrichtung 13 und damit der Gaswäschevorrichtung 10 möglich. Mit den gespeicherten Chemikalien ist ein Betrieb der Gaswäschevorrichtung 10 während einer inaktiven Elektrodialysevorrichtung 13 möglich.

Die Fig. 2 zeigt eine schematische Darstellung eines erfindungsgemäßen Wärmepumpensystems 1 in einer zweiten Ausführungsform. Abweichend von dem in Fig. 1 dargestellten Wärmepumpensystem 1 ist die Gaswäschevorrichtung 10 in diesem Ausführungsbeispiel dazu aufgebaut die Elektrodialyse und die Abscheidung von aus dem Volumenstrom 3 entnommenem Kohlenstoffdioxid 19 einschrittig auszuführen. Eine Elektrodialysevorrichtung 13 mit Anionen-Austauscher-Membran ist fluidleitend mit einem Reaktionsabschnitt 17 verbunden, sodass Lauge 16 in den Reaktionsabschnitt 17 geleitet wird und dort mit Kohlenstoffdioxid aus dem Volumenstrom 3 reagiert. Dieses Kohlenstoffdioxid 19 wird in einem Zwischenprodukt 26 als Carbonat gebunden. Das Zwischenprodukt 26 wird in wässriger Lösung zurück in die Elektrodialysevorrichtung 13 mit Anionen-Austauscher-Membran geleitet, in welcher aus dem Zwischenprodukt 26 mit Wasser 41 Kohlensäure 40 und die Lauge 16 erzeugt wird.

In der Elektrodialysevorrichtung 13 mit Anionen-Austauscher-Membran herrscht ein erhöhter Druck von 30 bar, was ein Ausgasen von Kohlenstoffdioxid 19 aus der Kohlensäure 40 reduziert. Die Kohlensäure 40 wird in einen Behälter 42 geführt und zersetzt sich dort in Kohlenstoffdioxid 19 und Wasser 41. Das Wasser 41 wird zurück in die Elektrodialysevorrichtung 13 mit Anionen-Austauscher-Membran geleitet, das Kohlenstoffdioxid 19 wird aufgefangen und in eine Gastrocknungseinheit 25 geleitet, was der in Fig. 1 gezeigten Ausführungsform entspricht.

Die Fig. 3 zeigt eine schematische Darstellung eines erfindungsgemäßen Wärmepumpensystems 1 in einer dritten Ausführungsform. Abweichend von der Darstellung der Fig. 1 zeigt die Fig. 3 eine schematische Darstellung eines Wärmepumpensystems 1 mit einem Kältemittelkreislauf, der Kohlenstoffdioxid als Kältemittel nutzt. Der Kältemittelkreislauf ist daher abweichend aufgebaut von dem in Fig. 1 und Fig. 2 dargestellten Kältemittelkreislauf. Die Gaswäschevorrichtung 10 entspricht im Wesentlichen der Gaswäschevorrichtung 10 der in Fig. 1 dargestellten Ausführungsform. Abweichend wird das gasförmige Kohlenstoffdioxid 19 von der Gastrocknungseinheit 25 mittels einer Kohlenstoffdioxidausleitung 11 in eine Kohlenstoffdioxideinleitung 23 eingeleitet. Die Kohlenstoffdioxideinleitung 23 ist Teil des Kältemittelkreislaufs, sodass das Kohlenstoffdioxid 19 dem Kältemittelkreislauf zugeführt wird. Ein erster Wärmetauscher 5 ist als Verdampfer ausgeführt und weiterhin umfasst der Kältemittelkreislauf einen Phasenseparator 30, eine Drossel 31, einen Kompressor 4 und einen zweiten Wärmetauscher 7, der hier als Gaskühler ausgeführt ist. In dem Phasenseparator 30 liegt gasförmiges Kohlenstoffdioxid 19 und flüssiges Kohlenstoffdioxid 19a vor. Flüssiges Kohlenstoffdioxid 19a kann aus dem Phasenseparator 30 und damit aus dem Kältemittelkreislauf mittels einer Kohlenstoffdioxidausleitung 24 entnommen werden und in einen Flüssiggasbehälter 27, der fluidleitend mit der Kohlenstoffdioxidausleitung 24 verbunden ist, eingeleitet werden.

Die Fig. 4 zeigt schematisch einen Aufbau eines Elektrodialysestapels mit Bipolar-Membran 33. Zwischen einer Kathode 38 und einer Anode 37 sind Anionen-Austauscher-Membranen 34, Kationen-Austauscher-Membranen 39 und eine Bipolar-Membran 33 angeordnet. In einem realen Elektrodialysestapel ist eine Vielzahl solcher Anordnungen gestapelt angeordnet. Dem Elektrodialysestapel wird eine wässrige Salzlösung 14 zugeführt. Getrieben von einem elektrischen Feld, das mittels der Kathode 38 und Anode 37 an den Elektrodialysestapel angelegt ist, durchdringen die Anionen der wässrigen Salzlösung 14 die Anionen-Austauscher-Membranen 34 und die Kationen der wässrigen Salzlösung 14 die Kationen-Austauscher-Membranen 39. Aufgrund der Bipolar-Membran 33 wird in dem Säurebereich 35 eine Säure 15, die mit der wässrigen Salzlösung 14 korrespondiert, gebildet. In dem Laugenbereich 36 wird eine Lauge 16, die mit der wässrigen Salzlösung 14 korrespondiert, gebildet. Ein derartiger Elektrodialysestapel ist in einer Elektrodialysevorrichtung 13 enthalten, wie sie in Fig. 1 und Fig. 3 dargestellt ist.

Die Fig. 5 zeigt schematisch einen Aufbau eines Elektrodialysestapels mit Bipolar-Membran 33, wobei ein Säurebereich 35 mittels einer Anionen-Austauscher-Membran 34 von einem Laugenbereich 36 abgetrennt ist. In den Laugenbereich 36 wird ein Carbonat als Zwischenprodukt 26 in wässriger Lösung und Wasser 41 eingeleitet. Durch die Anionen-Austauscher-Membran 34 gehen Carbonationen und Hydrogencarbonationen in den Säurebereich 35 über, wodurch in diesem Kohlensäure 40 gebildet wird. In dem Laugenbereich 36 wird dabei die Lauge 16, die mit dem eingeleiteten Carbonat korrespondiert, gebildet.

## Patentansprüche

1. Wärmepumpenmodul zum Entzug von Wärme aus Umgebungsluft, bevorzugt zum Beheizen eines Innenraums von einem Gebäude, umfassend einen ersten Wärmetauscher (5) und ein Gebläse (6), mittels welchem ein Volumenstrom (3) der Umgebungsluft durch den ersten Wärmetauscher (5) förderbar ist,
**dadurch gekennzeichnet,**
**dass** das Wärmepumpenmodul eine Gaswäschevorrichtung (10) zur nasschemischen Gaswäsche umfasst, wobei die Gaswäschevorrichtung (10) so angeordnet ist, dass der mittels des Gebläses (6) erzeugte Volumenstrom (3) durch die Gaswäschevorrichtung (10) gefördert wird, wodurch Kohlenstoffdioxid (19) mittels nasschemischer Gaswäsche aus dem Volumenstrom (3) entnehmbar ist.

2. Wärmepumpenmodul nach Anspruch 1,
**dadurch gekennzeichnet,**
**dass** die Gaswäschevorrichtung (10) eine Elektrodialysevorrichtung (13), bevorzugt umfassend einen Bipolar-Membran-Elektrodialyse-Stapel, aufweist, mittels welcher eine wässrige Salzlösung (14), bevorzugt eine wässrige Natriumchlorid-Lösung, Kaliumchlorid-Lösung, Natriumacetat-Lösung oder Kaliumcarbonat-Lösung, durch Elektrodialyse, insbesondere durch Bipolar-Membran-Elektrodialyse, in eine Säure (15) und in eine Lauge (16) umsetzbar ist.

3. Wärmepumpenmodul nach Anspruch 2,
**dadurch gekennzeichnet,**
**dass** die Gaswäschevorrichtung (10) ein Chemikalienspeichermittel (21) umfasst, mittels welchem Chemikalien zum Betrieb der Gaswäschevorrichtung (10), insbesondere die Säure (15) und die Lauge (16), bevorratbar sind.

4. Wärmepumpenmodul nach Anspruch 2 oder 3,
**dadurch gekennzeichnet,**
**dass** die Gaswäschevorrichtung (10) einen Reaktionsabschnitt (17) umfasst, der mittels des Gebläses (6) mit dem Volumenstrom (3) durchströmbar ist, wobei der Reaktionsabschnitt (17) entlang einer Luftstromrichtung (L) bevorzugt vor dem ersten Wärmetauscher (5), insbesondere zwischen Gebläse (6) und erstem Wärmetauscher (5), angeordnet ist, und wobei der Reaktionsabschnitt (17) eine Laugendüse (28) umfasst, mit der Lauge (16) dem Volumenstrom (3) zuführbar ist, sodass Kohlenstoffdioxid (19) aus dem Volumenstrom (3) mit der Lauge (16) umsetzbar und in einem Zwischenprodukt (26) chemisch bindbar ist.

5. Wärmepumpenmodul nach Anspruch 4,
**dadurch gekennzeichnet,**
**dass** die Gaswäschevorrichtung (10) einen Kohlenstoffdioxidabscheider (18) mit einer Säureeinleitung (29) aufweist, über welche die Säure (15) in das Zwischenprodukt (26) einleitbar ist, sodass im Kohlenstoffdioxidabscheider (18) Kohlenstoffdioxid (19) durch eine exotherme chemische Reaktion freisetzbar und auffangbar ist und die wässrige Salzlösung (14) als Reaktionsprodukt entsteht.

6. Wärmepumpensystem (1), bevorzugt zum Beheizen eines Innenraums von einem Gebäude, umfassend einen zweiten Wärmetauscher (7), bevorzugt zur Abgabe von Wärme an einen Innenraum, **gekennzeichnet durch**
ein Wärmepumpenmodul nach einem der Ansprüche 1 bis 5, wobei der zweite Wärmetauscher (7) in einem Kältemittelkreislauf mit dem Wärmepumpenmodul, insbesondere mit dem ersten Wärmetauscher (5), fluidleitend verbunden ist.

7. Wärmepumpensystem (1) nach Anspruch 6,
**dadurch gekennzeichnet,**
**dass** der Kältemittelkreislauf für die Verwendung von Kohlenstoffdioxid (19) als Kältemittel eingerichtet ist und eine Kohlenstoffdioxideinleitung (23) aufweist, die mit einer Kohlenstoffdioxidausleitung (11) der Gaswäschevorrichtung (10) fluidleitend verbunden ist, so dass Kohlenstoffdioxid (19) in den Kältemittelkreislauf einleitbar ist.

8. Wärmepumpensystem (1) nach Anspruch 7,
**dadurch gekennzeichnet,**
**dass** der Kältemittelkreislauf eine Kohlenstoffdioxidausleitung (24) umfasst, über die flüssiges Kohlenstoffdioxid (19a) aus dem Kältemittelkreislauf ausleitbar ist, wobei die Kohlenstoffdioxidausleitung (24) bevorzugt mit einem von dem Wärmepumpensystem (1) umfassten Flüssiggasbehälter (27) zur Speicherung des flüssigen Kohlenstoffdioxids (19a) fluidleitend verbunden ist.

9. Verfahren zum Betrieb eines Wärmepumpenmoduls zum Entzug von Wärme aus Umgebungsluft, bevorzugt zum Beheizen eines Innenraums von einem Gebäude, umfassend einen ersten Wärmetauscher (5) und ein Gebläse (6), mittels welchem ein Volumenstrom (3) der Umgebungsluft durch den ersten Wärmetauscher (5) gefördert wird,
**dadurch gekennzeichnet,**
**dass** der Volumenstrom (3) mittels des Gebläses (6) durch eine vom Wärmepumpenmodul umfasste Gaswäschevorrichtung (10) gefördert wird, wobei Kohlenstoffdioxid (19) mittels nasschemischer Gaswäsche aus dem Volumenstrom (3) entnommen wird.

10. Verfahren zum Betrieb eines Wärmepumpenmoduls nach Anspruch 9, **dadurch gekennzeichnet,**
**dass** mittels einer Elektrodialysevorrichtung (13) der Gaswäschevorrichtung (10), bevorzugt umfassend einen Bipolar-Membran-ElektrodialyseStapel, eine wässrige Salzlösung (14), bevorzugt eine wässrige Natriumchlorid-Lösung, Kaliumchlorid-Lösung, Natriumacetat-Lösung oder Kaliumcarbonat-Lösung, durch Elektrodialyse, bevorzugt durch Bipolar-Membran-Elektrodialyse, in eine Säure (15) und in eine Lauge (16) umgesetzt wird.

11. Verfahren zum Betrieb eines Wärmepumpenmoduls nach Anspruch 10, **dadurch gekennzeichnet,**
**dass** ein Reaktionsabschnitt (17) der Gaswäschevorrichtung (10), welcher entlang einer Luftstromrichtung (L) vorteilhaft vor dem ersten Wärmetauscher (5), insbesondere zwischen dem Gebläse (6) und dem ersten Wärmetauscher (5), angeordnet ist, mit dem vom Gebläse (6) erzeugten Volumenstrom (3) durchströmt wird, wobei die Lauge (16) in dem Reaktionsabschnitt (17) mittels einer Laugendüse (28) dem Volumenstrom (3) zugeführt wird, wobei Kohlenstoffdioxid (19) aus dem Volumenstrom (3) mit der Lauge (16) umgesetzt und in einem Zwischenprodukt (26) chemisch gebunden wird.

12. Verfahren zum Betrieb eines Wärmepumpenmoduls nach Anspruch 11, **dadurch gekennzeichnet,**
**dass** in einem Kohlenstoffdioxidabscheider (18) der Gaswäschevorrichtung (10) die Säure (15) mittels einer Säureeinleitung (29) in das Zwischenprodukt (26) zugeführt wird, wobei durch eine exotherme chemische Reaktion das Kohlenstoffdioxid (19) freigesetzt und in dem Kohlenstoffdioxidabscheider (18) aufgefangen wird, wobei die wässrige Salzlösung (14) als Reaktionsprodukt entsteht.

13. Verfahren zum Betrieb eines Wärmepumpenmoduls nach Anspruch 12, **dadurch gekennzeichnet,**
**dass** das aufgefangene Kohlenstoffdioxid (19) eine Gastrocknungseinheit (25) durchströmt, in welcher ein Druck des Kohlenstoffdioxids (19) vermindert wird und das Kohlenstoffdioxid (19) dabei abgekühlt wird, wodurch darin enthaltene Feuchtigkeit in der Gastrocknungseinheit (25) kondensiert und aus dem aufgefangenen Kohlenstoffdioxid (19) abgetrennt wird.

14. Verfahren zum Betrieb eines Wärmepumpensystems (1) bevorzugt zum Beheizen eines Innenraums von einem Gebäude, umfassend ein Wärmepumpenmodul nach einem der Ansprüche 1 bis 5,
**dadurch gekennzeichnet,**
**dass** aus dem Volumenstrom (3) entnommenes, bevorzugt gasförmiges, Kohlenstoffdioxid (19) in einen Kältemittelkreislauf des Wärmepumpensystems (1) über eine Kohlenstoffdioxideinleitung (23) eingeleitet wird, wobei in dem Kältemittelkreislauf flüssiges Kohlenstoffdioxid (19a) anfällt, welches wenigstens teilweise über eine Kohlenstoffdioxidausleitung (24) aus dem Kältemittelkreislauf ausgeleitet und bevorzugt in einen fluidleitend mit der Kohlenstoffdioxidausleitung (24) verbundenen Flüssiggasbehälter (27) geleitet wird.
